# EUROPEAN PATENT SPECIFICATION

(11) **EP 3 166 413 B1**
(45) Date of publication and mention of the grant of the patent: **13.05.2020**
(21) Application number: 15728190.8
(22) Date of filing: 22.04.2015
(51) Int. Cl.: A23B 5/015, A23B 7/015, A23B 7/16, H05H 1/24, A23B 4/015, A23B 7/14

(54) **PROCESS FOR THE TREATMENT OF BIOLOGICAL MATERIAL**
VERFAHREN ZUR BEHANDLUNG VON BIOLOGISCHEM MATERIAL
PROCÉDÉ DE TRAITEMENT DE MATIÈRE BIOLOGIQUE

(30) Priority: 08.07.2014 NL 2013151; 28.10.2014 WO PCT/NL2014/050744
(43) Date of publication of application: 17.05.2017
(73) Proprietor: Hoefnagels, Johannes Adrianus Maria, 5076 AS Haaren (NL)
(72) Inventor: Hoefnagels, Johannes Adrianus Maria, 5076 AS Haaren (NL)
(74) Representative: V.O.
(86) International application number: PCT/NL2015/050265
(87) International publication number: WO 2016/007000

(56) References cited:
- WO-A1-2012/112042
- WO-A1-2016/140447
- US-A1- 2008 260 578
- US-A1- 2013 189 156
- MISRA N N ET AL: "In-package nonthermal plasma degradation of pesticides on fresh produce", JOURNAL OF HAZARDOUS MATERIALS, vol. 271, 12 February 2014 (2014-02-12), pages 33-40, XP028841336, ISSN: 0304-3894, DOI: 10.1016/J.JHAZMAT.2014.02.005
- UTA SCHNABEL ET AL: "Decontamination of Microbiologically Contaminated Specimen by Direct and Indirect Plasma Treatment", PLASMA PROCESSES AND POLYMERS, vol. 9, no. 6, 4 October 2011 (2011-10-04) , pages 569-575, XP055151416, ISSN: 1612-8850, DOI: 10.1002/ppap.201100088

## Description

The present invention is directed to a process for the treatment of biological material, not being a fruit or vegetable. Especially, the process of the invention is for the coating of biological material. Particularly, the biological material is treated with a physical treatment, optionally followed by another treatment.

In the trade of biological material, including fruits and/or vegetables, for example in the trade of pomes, such as and preferentially apples and pears, but also including herbs, spices, meat, poultry and other animal parts or products including edible parts of animals, the traders are continuously confronted with ever increasing demands. Such demands relate to or are associated with storage lifetime, or shelf life, amounts of residues, and especially residues from conserving agents, pesticides, fungicides and so on; and with pricing.

For example, it is known from NL-1031774, NL-2001567 and EP-A-1 854 360 to apply a coating containing carboxy methyl cellulose and sucrose esters or fructose esters of fatty acids to (the skin of) fruits and/or vegetables to increase the shelf life and the display shelf life. Particularly, fruits and/or vegetables that have been stored in cooling units, for instance in controlled atmosphere cooling units, may be, after optionally being washed with water, dipped in or otherwise coated with said coating composition. In specific embodiments this coating process is followed by a drying step.

Further, it is well-known and rather common practice to spray or otherwise apply pesticides and fungicides to growing biological material such as fruits and/or vegetables. The biological material treated with these compounds may or may not after harvesting be washed or otherwise be subjected to a treatment to reduce or remove the amounts of these compounds and/or the residues thereof.

Moreover, it is well-known that biological material, such as fruits and/or vegetables, before or after harvesting or before or after killing or otherwise processing are either physically and/or chemically treated to avoid or reduce quality loss by micro organisms, insects and other organisms. Such physical and chemical treatments can for instance be cooling, optionally in a controlled atmosphere, *e.g*. in a low oxygen atmosphere; treating with pesticides or fungicides or bactericides. It is, *e.g.,* known to spray the product Bellis® (*ex* BASF) or Switch® (*ex* Syngenta) before harvesting on fruit to protect it during storage against rotting or microbial decay. Of course it is also possible that such treatments are combined.

WO 2012/112042 discloses a device for disinfecting plant seeds, using a surface dielectric barrier discharge unit generating a cold atmospheric plasma.

Schnabel et al. describe in an article in Plasma Processes and Polymers, vol. 9 (6) (2011), 569-575 that fresh fruits and vegetables may be microbiologically decontaminated by direct and indirect plasma treatment.

Misra et al. describe in the Journal of Hazardous Materials (Vol 271, Febr. 12, 2014, pages 33-40) an in-package nonthermal plasma technology to degrade pesticides on fresh produce.

US 2013/0189156 A1 relates to a system and method for decontamination of a food product or medical device by placing it in a closed dielectric container with a working gas, and producing a controlled electrical discharge.

In US 2008/0260578, a device is described for treating goods with the aid of an electric discharge in a receiving chamber for the goods. Electrodes are used on the inner and outer side of said chamber.

WO 2016/140447, a document published after the European filing date, teaches a plasma treatment apparatus for a meat product.

It is an aim of the present invention to provide a method to improve the effect of coating materials on the surface of biological material. This may for example occur by providing steps providing a better adherence of the coating materials to the surface of the biological material, or to effect a better, more complete coverage of the coating material over the surface of the biological material treated. The process of the invention may also result in a minimalisation of (residues of) pesticides, fungicides, bactericides or other conserving agents. This minimalisation may be achieved with or without combination with detergent compositions, for example based on sucrose-esters, and/or with or without combination with mechanical means, such as sprayers, sponge rolls and bristles.

It is a further or other aim to reduce microbial contamination on (the surface of) the biological material.

Yet a further or other aim of the present invention is to reduce the amount of (residues of) pesticides, fungicides, bactericides or other conserving agents on the surface of biological material. In this light, it is noted that consumers, consumer organizations, governmental institutions, supermarket chains and other entities have continuously sharper demands in respect of the presence of residues on biological material such as fruits and vegetables, but also other biological products. Growers have the option not to use biocides *etc.* in the growing of their products, but this immediately has a downside in respect of yield and pricing. In practice, most growers still use chemicals to increase the product yield per acre. This makes that a need exists to degrade or otherwise reduce the residues of the chemicals used on the consumable biological material.

A further or other aim of the invention is to reduce the use of pesticides, microbicides and fungicides in general on biological material. This may lead to a considerable costs saving, since the chemicals presently used for these functions are expensive either in price or in amount. Moreover, if such materials do not need to be used or are less frequently used, a considerable amount of labour can be reduced.

A further aim of the invention is to provide a method that does not unnecessarily increase the handling costs in the sorting, washing and/or coating of biological material.

The invention is based on subjecting the biological material to a specific so-called "cold atmospheric plasma" treatment followed by applying a coating to the piece of biological material treated in this way. With cold atmospheric plasma, it is meant a plasma generated at about ambient conditions, wherein "cold" generally does not encompass temperatures higher than 60°C, preferably not higher than 40°C.

In a first aspect, the present invention relates to a method for treating a piece of biological material, not being a fruit or vegetable, for improving the adherence and/or completeness of a coating, wherein in step (a) the outer surface of a piece of biological material is subjected to cold atmospheric plasma, being a plasma generated at temperatures not higher than 60°C, using a surface dielectric barrier discharge plasma unit, wherein step (a) is followed by applying a coating to the piece of biological material.

In a preferred embodiment, this biological material does not encompass microbiological material. That is, preferably, the invention relates to biological material having dimensions of a millimeter or more.

Explicitly excluded in the process forming the first aspect are (pieces of) fruits and/or vegetables including mushrooms, flowers, potatoes, onions, seeds, bulbs, tubers, and pseudo carps. The reason for this explicit exclusion is that NL-2 013 151 and PCT/NL2014/050744 (in the name of Applicant, and priority documents of the present application) are pending but not yet published, and describe the process for the excluded material.

Hence, the present invention is directed to a method for treating a piece of biological material, not being a fruit or vegetable, wherein in step (a) the outer surface of a piece of biological material is subjected to cold atmospheric plasma using a surface dielectric barrier discharge plasma unit.

Examples of biological material to be treated in accordance with the present invention encompass herbs, spices, grasses, non-edible plants, meat, poultry, shellfish, crustaceans and other animal products including edible parts of animals, and eggs.

The method of the present invention encompasses a method for treating a piece of biological material, wherein in step (a) the outer surface of the piece of biological material is subjected to cold atmospheric plasma using a surface dielectric barrier discharge plasma unit, wherein said surface is moist and/or wherein the subjection to cold atmospheric plasma is amplified by the co-presence of a gas stream and/or hydrogen peroxide.

This results in a process wherein the effectivity of the cold plasma is increased.

One way which was found to increase the effectivity of the cold plasma, was to treat pieces of biological material having a moist or a bit wet surface. This can be effected by contacting the surface to be treated with an aqueous composition. The way of contacting is not critical as long as some moisture is transferred to the surface to be treated. Suitable ways are by spraying, dipping, jetting or showering. The moistening can be done before, but also during the plasma treatment.

Another way is to direct a gas stream to the surface treated with the cold plasma. Thereto all kinds of gases or mixtures of gases can be used. In a preferred embodiment of this gas stream embodiment nitrogen is used. By the use of nitrogen gas, no ozone is produced in the plasma treatment, which may be an advantage especially in case a surface is treated that is affected by oxidation.

A third way is making use of hydrogen peroxide. The hydrogen peroxide can for instance be used in the form of an aqueous solution.

Incidentally, in the Report titled "Geïnduceerde afbraak residuen op fruit; Nieuwe Technieken 2011; Eindrapportage" (in translation: Induced degradation residues on fruit; New techniques 2011; Final Report), S. Bastiaan-Net and D. Somhorst; Wageningen UR Food & Biobased Research; ISBN No. 978-94-6173-257-6; January 15, 2012, the authors conclude that "the cold plasma technique appears not suitable to reduce effectively the level of plant protection products on pomes". The report is not very detailed on which technique was explicitly used, except than that apples are treated by cold plasma, being a kind of purple flame (≈40°C) (nitrogen gas gives free nitrogen radicals when subjected to an electric pulse). Particularly, each apple was "contacted" with the cold plasma 6 times: the stalk part, the crown part and the body part in 4 sections, each for 40 seconds. The technique used was seen as laborious and not suitable for treatment of bulk products. It is believed in accordance with the hypotheses behind the present invention that the technique used or studied by these authors uses non-uniform plasma.

The method of the present invention can be carried out on an industrial scale treatment device for treating a piece of biological material comprising at least one surface dielectric barrier discharge plasma unit and a rotation unit arranged for rotating the piece of biological material about an axis extending through the piece of biological material; wherein the surface dielectric barrier discharge plasma unit and the rotation unit are mounted to a frame such that, in use, the piece of biological material when rotated is subjected to cold atmospheric plasma generated by the surface dielectric barrier discharge unit.

If already a cold plasma unit was used with a piece of biological material, then this was under laboratory conditions or only with tiny material. An example thereof is the above-referred to Report of Wageningen University. The device of the present invention makes it possible to work on industrial scale, meaning that it can treat amounts of biological material of at least 30 kg per hour and actually much higher.

In accordance with the present invention, the specific cold atmospheric plasma treatment may be carried out using a surface dielectric barrier discharge (SDBD) plasma unit. Such units generate at normal air pressure a cold plasma that transport plasma radicals to a surface to be treated.

One suitable surface dielectric barrier discharge plasma unit is described in all detail in WO 2008/082297. This document teaches a surface dielectric barrier discharge plasma unit comprising a solid dielectric structure provided with an interior space wherein an interior electrode is arranged, further comprising a further electrode for generating in concert with the interior electrode a surface dielectric barrier discharge plasma, wherein the plasma unit is further provided with a gas flow path along a surface of the structure.

Also in EP-A-2 105 042, a suitable surface dielectric barrier discharge plasma unit is described.

However, also other plasma units capable of producing a homogenous plasma may be used. For example, apparatuses using a plasma jet or having a plate form or other specific form compatible with or destined for a specific aim may be used. The plasma unit may be positioned around the object to be treated, above or below such object or in all other positions relative to such object. Moreover, the unit may be developed such that at the same time various objects and packages are subjected to the plasma stream. In addition, a number of units can be used at the same time.

Both apparatuses are useful in respect of the present invention. The apparatuses described in both patent applications are incorporated in the present application by reference.

To overcome the problem that plasma treatments are non-uniform, especially when treating structures having low or non-gas permeable materials, the surface dielectric barrier discharge plasma unit to be used according to the present invention has its gas flow path oriented substantially transverse with respect to a treating surface of the solid dielectric structure.

By orienting the gas flow path substantially transverse with respect to a treating surface of the structure, e.g. through or along a side surface of the solid dielectric structure, a desired plasma treating area near the treating surface of the structure can be reached directly by the gas flow. Accordingly, a gas flow path section upstream to the desired area but located in a plasma zone is reduced and the gas can be provided more evenly in the entire plasma region, so that a more uniform plasma process is enabled. Further, the gas particles are processed more efficiently.

Said in other words, a plasma is created by jetting via a gas stream plasma radicals to the surface of a piece of biological material, such as a piece of fruit or vegetable, where these radicals will have a uniform, local disinfecting or activating effect as described in more detail herein-below.

In the above described device, the piece of biological material is rotated about an axis extending through the piece of biological material. It is however also possible to find other arrangements that also allow that the plasma contacts the surface of the biological material entirely and intensively. For example, the plasma unit can also be arranged such that it can rotate around the biological material to be treated. Moreover, an arrangement using a number of units around the material to be treated may be used. As said herein-above, both a jet type plasma unit as a plasma unit having a plate form can be used.

In a preferred embodiment, the present invention relates to a method improving the adherence and/or completeness of a coating, wherein step (a) is followed by applying a coating to the piece of biological material, such as a fruit or vegetable. This coating step is a conventional coating step and can for instance be the method described in the above-cited NL-1031774, NL-2001567 and EP-A-1 854 360.

This method is preferred, because it was found in the present invention that the shelf life of the biological material can be increased by first subjecting the piece of biological material to step (a) of the present invention and then apply a coating known *per se.* These coatings are generally oxygen barrier coatings and were found to better adhere to the surface (often having a low surface tension), or at least to more homogeneously cover the surface of the biological material, such as the surface of fruits and vegetables treated with the cold plasma step.

This is illustrated in Example 1 and Figures 3.1-3.4 described in detail herein-below, which show that when pieces of fruit or vegetables are first treated with cold plasma in accordance with the present invention these pieces are better, more completely and more homogeneously coated by a coating composition. It is noted in this light that the first aspect of the present invention excludes fruit and vegetables. This is however only because of the teaching in the two earlier named documents. The results on fruit and vegetables are however entirely suitable as proof of principle for the invention when applied to other biological material as well. Hence, if herein-below reference is made to fruit or vegetable, the teaching is equally applicable to other types of biological material, and even other types of material. Without wishing to be bound to any theory, it is hypothesized that the cold plasma treatment increases the surface tension of the skin of the fruit or vegetable or in general the surface of the biological material. This effect is even reached on rough areas or areas suffering from mechanical damage.

The method of the present invention is believed to reduce microbial, bactericidal or fungicidal contamination.

It is noted in this respect that on the surface of for example fruit and vegetables, but also on the surface of other biological materials, all kinds of microorganisms are present. On the basis of tests, the results thereof being shown herein-below in reference Example 2, using test organisms *Escherichia coli* representing bacteria and especially Gram negative bacteria, and *Penicillium expansum* representing fungi, it is shown that considerable reductions in the amounts of bacteria and fungi can be obtained. That is, the method of the present invention is capable of disinfecting fruits and vegetables to an important degree.

It was found that by using a plasma treatment of up to 60 seconds, or up to 30 seconds, or up to 20 seconds, such as 0.1-15 seconds, preferably 1-14 seconds, more preferably 2-12 seconds, this plasma treatment is capable to reduce the number of microorganisms (bacteria and fungi) to 1-2% of the original contamination. Optionally, this treatment may be repeatedly carried out.

In addition, by the method of the present invention the amount of residues of pesticides, fungicides, bactericides and other biocides was found to be reduced considerably. In the culture and storage of vegetables, fruits and other vegetable materials, the producers often use a high amount of these materials to protect the plants. These materials generally are from a health or environmental perspective not desired, but stay in contact and keep present on the plant material treated therewith. Only shortly before use of the (stored) plant material, the presently used removal techniques can be applied. The method of the present invention, though, makes it possible to treat the biological material before storing. From an environmental and health perspective, this is a major advantage.

In a preferred embodiment, and as said herein-above while sketching the second aspect of the present invention, the pieces of biological material, such as of fruits and vegetables to be treated are moist or a bit wet. Then, the effectivity of the cold plasma was found to in crease to some extent. Also, the effect of the plasma can be amplified through use of suitable gases or mixtures thereof such as the use of H₂O₂ or solutions or mixtures containing it.

The present invention will now be further elaborated while referring to the Figures, wherein:
Fig. 1 shows a schematic side view of a surface dielectric barrier discharge plasma unit; and
Fig. 2 shows schematic perspective view of a treatment device.

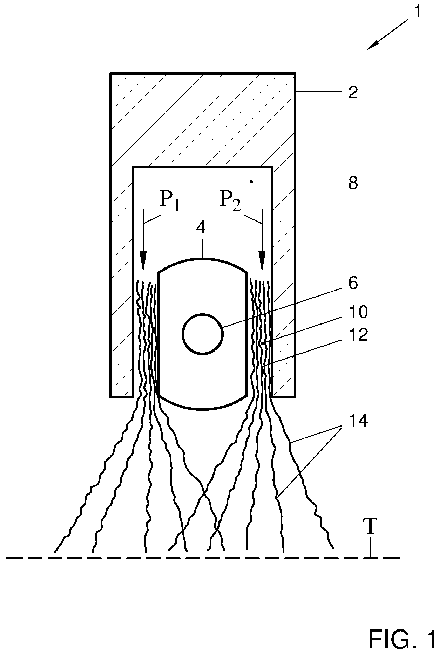

Fig. 1 shows a side view of a suitable surface dielectric barrier discharge plasma unit 1 for performing a cold atmospheric plasma treatment. The unit 1 includes an exterior grounding electrode 2, and a solid dielectric structure 4. The solid dielectric structure 4 includes an interior electrode 6, formed by an electrolyte, thus facilitating, apart from the electric functionality, a temperature conditioning means. The solid dielectric structure element 4 can be cooled. The electrolyte can be formed by a liquid and/or a gas. A gas flow is initiated in the area 8 above the solid dielectric structure 4. In Fig. 1, the gas flow is indicated by arrows P1 and P2, and is substantially transverse with respect to the treating surface T.

In a space 10, between the grounding electrode 2 and the solid dielectric structure 4, surface dielectric barrier discharge plasma 12 is formed. As the plasma 12 exits the unit 1, it forms a plasma jet of cold atmospheric plasma indicated by reference numeral 14. The plasma jet can be used to treat a piece of fruit or vegetable (described as reference example) with cold atmospheric plasma.

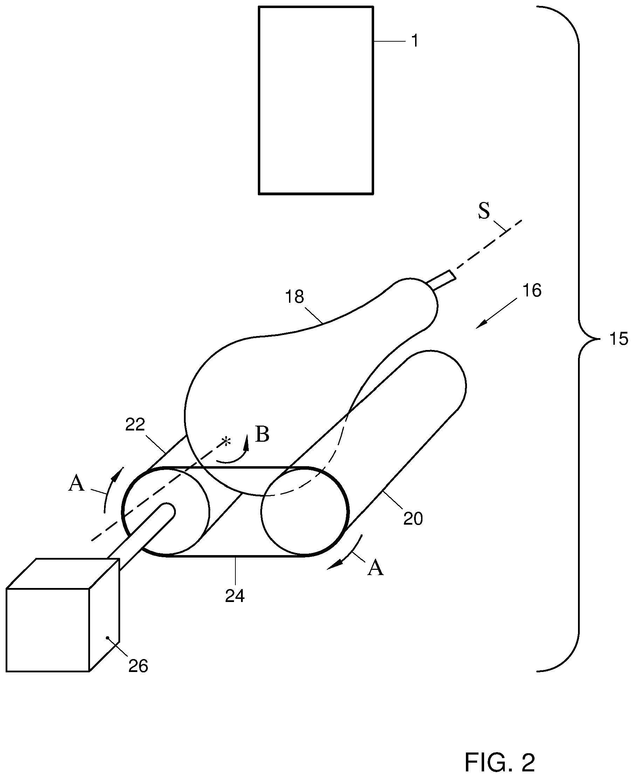

Fig. 2 depicts a schematic perspective view of a treatment device 15. The treatment device includes a rotation unit 16 arranged for rotating a piece of fruit or vegetable (described as reference example) about an axis S extending through the piece of fruit or vegetable and a surface dielectric barrier discharge plasma unit 1. It is convenient to choose the axis to be a central axis of the piece of fruit or vegetable. Generally, the central axis extends along a stem of the piece of fruit or vegetable and through a heart of the piece of fruit or vegetable.

In this example, the rotation unit includes a first roller 20 and a second roller 22 each having an soft outer surface in order to prevent damage to the piece of fruit or vegetable, for example a pear 18, being rotated. The rotation unit 16 further includes a gear transmission element 24 such as a belt or chain. A driving member 26 is provided and is arranged for rotating at least one of the first roller 20 and the second roller 22. In this example, the driving member 26 rotates, in use, the second roller 22 and the first roller 22 is rotated by the gear transmission element 24.

When the second roller 22 is rotated in a direction A the first roller 20 is also rotated in the direction A. This results in the pear 18, being rotated in an opposite direction B about the central axis S extending through the pear 18. The soft surface of the rollers 20, 22 helps grip and rotate the pear 18. It is noted that in this example, the gear transmission element 24 causes the first roller 20 to be rotated. However, it is conceivable that only one roller is rotated and that the other roller is free to rotate. In this way, the other roller is rotated by the pear 18.

The surface dielectric barrier discharge plasma unit 1 and the rotation unit are mounted to a frame, not pictured but conventional, such that, in use, the piece of fruit or vegetable, pear 18, when rotated is subjected to cold atmospheric plasma generated by the surface dielectric barrier discharge plasma unit 1. In this example, the unit 1 provides a plasma jet for 10 seconds at a distance of approximately 1.5 cm from the pear 18. During the application of cold atmospheric plasma the pear 18 is rotated such that all sides are subjected to the surface plasma. This has been found to treat the pear 18 uniformly. It will be appreciated that the treatment device 15 may be included in a conveyor system for processing and handling pieces of fruit and or vegetables.

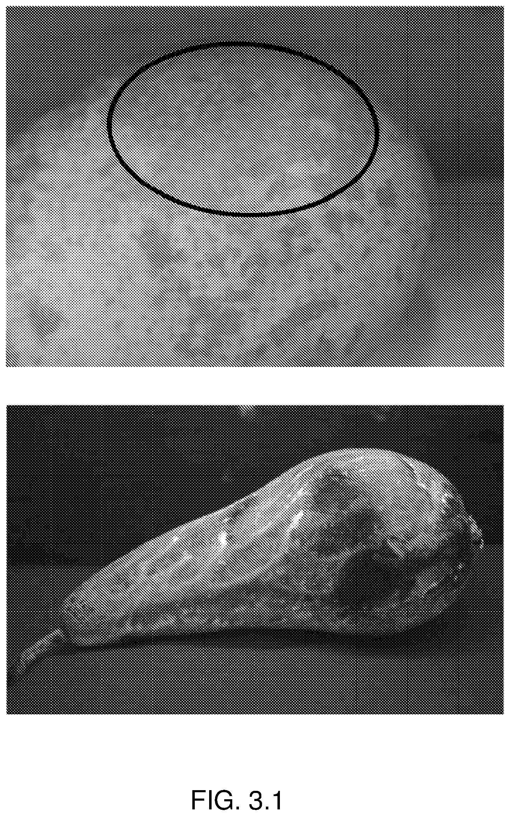

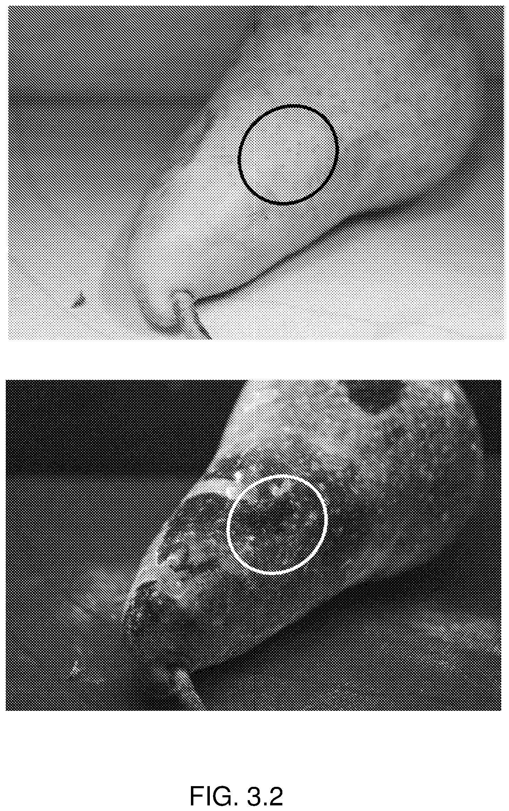

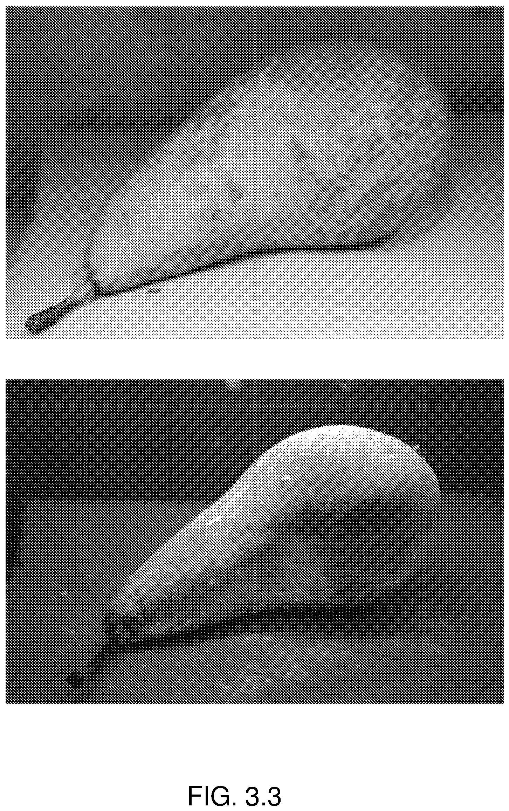

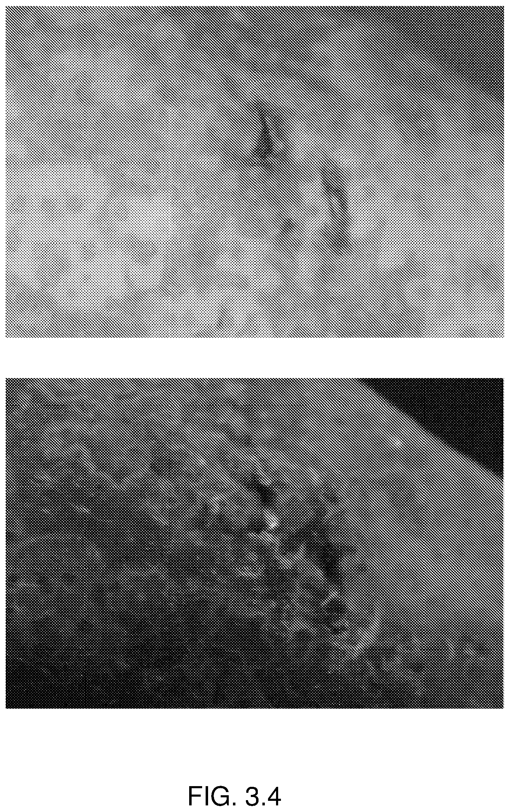

Fig. 3 shows in Figs. 3.1 and 3.2 photographs (without and with UV lightening) of a pear coated with a coating composition; in Fig. 3.3 photographs of a pear treated with cold plasma in accordance with the present invention followed by a coating step; and in Fig. 3.4 photographs like those in Fig. 3.3, but now on a pear having mechanical damage.

It is also possible according to the invention to treat biological material that is packed for transporting, when holes are present in the packing wherein said biological material is transported.

The present invention will be further elaborated while referring to the following, non-limiting examples. If percentages are mentioned in these examples and the other parts of the description, these percentages are weight percentages drawn to the weight of the total composition, unless otherwise indicated.

### Example 1 (Reference Example)

Pears (Conference) were treated on a line depicted in Fig. 2 using the following plasma conditions: atmosphere: air; plasma power: 250 W; total treatment time per pear: 50 sec; distance of plasma jet to pear surface: 1.5-4 cm (due to form of pear).

After this plasma treatment, the pears were coated by dipping of the pears in an aqueous composition containing 1.5% Bio-Fresh™ (*ex* De Leye Agro B.V., Rotterdam, The Netherlands) and a UV fluorescing substance (*ex* Tuhamij, 's-Gravenzande, The Netherlands). After drying, the homogeneity of the coating was checked under a UV lamp.

In Figures 3.1-3.4, the results are shown, wherein in Fig. 3.1 an untreated pear is shown, in Fig. 3.2 a pear only subjected to a coating with the Bio-Fresh composition used, and in Figs. 3.3 and 3.4 pears subjected to a cold plasma treatment and a coating step in accordance with the present invention. One can see from Figs. 3.1 and 3.2, that in pears not treated with cold plasma, the coating is not fully covering the pears. In Fig. 3.2, it can be seen that even unexpected parts of the pear are not coated.

Figs. 3.3 and 3.4 show that pears treated in accordance with the present invention have a homogeneous coating, even at spots resulting from mechanical damage.

### Example 2 (Reference Example)

In order to investigate the effect of the cold plasma treatment of the present invention, pears were artificially contaminated with a higher number of microorganisms (*E. coli* and *P. expansum*) on their surface as compared to natural reality. Thereto, the pears were immersed in a bacterial or mould spore suspension holding 10⁷ microorganisms or mould spores per ml peptone physiological salt; for the controls the pears were immersed in peptone physiological salt solution without microorganisms/spores. After the immersion, the pears were dried for 1 hour at ambient conditions; after half an hour the pears were turned. This artificial contamination allowed a better comparison and made higher log reductions determinable.

A batch of 60 pears was treated under a cold plasma unit (330 W). The treatment length was 30 cm; the distance of the plasma unit to the part of the pears having the highest diameter was about 10 cm. The plasma conditions, treatments times and combinations with either a contact with a water or aqueous hydrogen peroxide solution bath (after the plasma treatment) are given in Table 1, together with the results.

After the plasma treatment, the pears are cut in two parts and mixed into 100 ml peptone fysiological salt, containing 0.1% Tween, using a sterile stomacher bag. The mixture was shaken for 1 minute using a pulsifier to bring the present bacteria in suspension. This suspension is used to make a dilution series. Dilutions coming from the *E. coli* embodiments are mixed with Violet Red Bile Lactose agar and incubated at 30°C for two days; dilutions coming from the *P. expansum* were mixed with Oxitetracyclin Glucose Yeast agar and incubated at 25°C for 3-5 days or until colonies were visible. The colonies were counted.

**TABLE 1**

| **Sample** | **Micro organism** | | **Plasma conditions** | | |
|---|---|---|---|---|---|
| | *E. coli* | *P. expansum* | treatmentting in seconds | bath + duration | log reduction |
| control | - | - | 0 | - | - |
| positive control | + | - | 0 | - | - |
| H₂O/H₂O₂ ref | + | - | 0 | H₂O/H₂O₂, 5 sec | 3.17 |
| H₂O ref | + | - | 0 | H₂O, 5 sec | 0.40 |
| | + | - | 90 | H₂O/H₂O₂ | 5.60 |
| | + | - | 90 | H₂O | 4.58 |
| positive control | - | + | 0 | - | - |
| H₂O/H₂O₂ ref | - | + | 0 | H₂O/H₂O₂, 5 sec | 1.00 |
| H₂O, ref | - | + | 0 | H₂O, 5 sec | 1.03 |
| | - | + | 90 | H₂O/H₂O₂ | 2.97 |
| | - | + | 90 | H₂O | 1.44 |

It can be seen that the plasma treatment results in a log reductions between 1.5 and 5.6 on *E. coli* and *P. expansum.*

## Claims

1. A method for treating a piece of biological material, not being a fruit or vegetable, for improving the adherence and/or completeness of a coating, wherein in step (a) the outer surface of a piece of biological material is subjected to cold atmospheric plasma, being a plasma generated at temperatures not higher than 60°C, using a surface dielectric barrier discharge plasma unit, wherein step (a) is followed by applying a coating to the piece of biological material.

2. The method of claim 1, for reducing microbial, bactericidal or fungicidal contamination.

3. The method of claim 2, wherein the treatment with plasma is carried out for 2-60 seconds, preferably 4-30 seconds, more preferably between 5-15 seconds, such as for 8-12 seconds, eventually with a repeat.

4. The method of any one of the preceding claims, wherein the piece of biological material encompasses herbs, spices, grasses, non-edible plants, meat, poultry, shellfish, crustaceans and other animal parts or products, including edible parts of animals, and eggs.

5. The method of any one of the preceding claims, wherein the piece of biological material is rotated or transported under said plasma unit or units.

6. The method of any one of the previous claims, using a plasma power of 200-400 W.

7. The process of any one of the previous claims, using a plasma treatment of less than 10 seconds.

## Patentansprüche

1. Verfahren zum Behandeln eines Stücks biologischen Materials, das kein Obst oder Gemüse ist, zum Verbessern der Haftung und/oder Vollständigkeit einer Beschichtung, wobei in Schritt (a) die äußere Oberfläche eines Stücks biologischen Materials kaltem atmosphärischem Plasma ausgesetzt wird, das ein Plasma ist, erzeugt bei Temperaturen nicht höher als 60 °C, unter Verwendung einer oberflächenaktiven dielektrischen Barriereentladungsplasmaeinheit, wobei Schritt (a) vom Aufbringen einer Beschichtung auf das Stück biologischen Materials gefolgt ist.

2. Verfahren nach Anspruch 1 zum Verringern mikrobieller, bakterizider oder fungizider Kontamination.

3. Verfahren nach Anspruch 2, wobei die Behandlung mit Plasma für 2 - 60 Sekunden, vorzugsweise 4 - 30 Sekunden, bevorzugter zwischen 5 - 15 Sekunden, so wie für 8 - 12 Sekunden, schließlich mit einer Wiederholung, durchgeführt wird.

4. Verfahren nach einem der vorhergehenden Ansprüche, wobei das Stück biologisches Material Kräuter, Gewürze, Gräser, nicht-essbare Pflanzen, Fleisch, Geflügel, Schalentiere, Krebstiere und andere tierische Teile oder Produkte, einschließlich essbarer Teile von Tieren, und Eier umfasst.

5. Verfahren nach einem der vorhergehenden Ansprüche, wobei das Stück biologischen Materials unter der Plasmaeinheit oder den Einheiten rotiert oder transportiert wird.

6. Verfahren nach einem der vorhergehenden Ansprüche, unter Verwendung einer Plasmaleistung von 200-400 W.

7. Verfahren nach einem der vorhergehenden Ansprüche, unter Verwendung einer Plasmabehandlung von weniger als 10 Sekunden.

## Revendications

1. Procédé de traitement d'un morceau de matière biologique, n'étant pas un fruit ou un légume, pour améliorer l'adhérence et/ou l'intégrité d'un revêtement, dans lequel dans l'étape (a) la surface externe d'un morceau de matière biologique est soumise à un plasma atmosphérique froid, étant un plasma généré à des températures non supérieures à 60 °C, utilisant une unité de plasma de décharge à barrière diélectrique de surface, dans lequel l'étape (a) est suivie de l'application d'un revêtement sur le morceau de matière biologique.

2. Procédé selon la revendication 1, pour réduire la contamination microbienne, bactéricide ou fongicide.

3. Procédé selon la revendication 2, dans lequel le traitement au plasma est réalisé pendant 2 à 60 secondes, de préférence 4 à 30 secondes, plus préférablement entre 5 et 15 secondes, comme pendant 8 à 12 secondes, éventuellement avec une répétition.

4. Procédé selon l'une quelconque des revendications précédentes, dans lequel le morceau de matière biologique englobe des herbes, des épices, des graminées, des plantes non comestibles, de la viande, de la volaille, des fruits de mer, des crustacés et d'autres parties ou produits d'origine animale, y compris des parties comestibles d'animaux, et des œufs.

5. Procédé selon l'une quelconque des revendications précédentes, dans lequel le morceau de matière biologique est tourné ou transporté sous ladite unité ou lesdites unités de plasma.

6. Procédé selon l'une quelconque des revendications précédentes, utilisant une puissance de plasma de 200 à 400 W.

7. Procédé selon l'une quelconque des revendications précédentes, utilisant un traitement au plasma de moins de 10 secondes.
